# EUROPEAN PATENT APPLICATION

(11) **EP 4 813 258 A1**
(43) Date of publication of application: **30.09.2026**
(21) Application number: 25171415.0
(22) Date of filing: 17.04.2025
(51) Int. Cl.: A47J 31/057, A47J 31/42, A47J 31/52, A47J 31/06

(54) **DRIP COFFEE MAKER WITH FLOW RATE CONTROLLED BREW BASKET**

(30) Priority: 24.03.2025 US 202519088139
(71) Applicant: Midea Group Co., Ltd., Foshan, Guangdong 528311 (CN)
(72) Inventor: Fowler, Simon, Foshan (CN); Persaud, Ryan, Foshan (CN); Brian, Langness, Foshan (CN)
(74) Representative: Ran, Handong

(57) **Abstract**

A drip coffee maker (10) includes a controller (60) that regulates a water/coffee contact time for coffee produced in a brew basket by controlling an electronically-controllable dispense valve disposed downstream of the brew basket in response to an output of a dispense rate sensor that senses dispense rate from a brew basket. In addition, in some instances the dispense rate sensor may be implemented as a weight sensor that senses the weight of the brew basket, and may additionally be used to sense the amount of coffee grounds dispensed into the brew basket by a grinder.

## Description

### Background

Coffee is a beverage made from roasted coffee beans, and has long been one of the most popular drinks in the world. Numerous devices and processes for making coffee have been developed, with most incorporating some variation on bringing water into contact with ground coffee beans to extract water soluble components from the ground coffee beans that give coffee its distinctive taste. However, roasted coffee beans can have numerous soluble components that impart different types of flavors that can be pleasing or displeasing to different palates, so variations in brewing processes can significantly impact the flavor of the resulting coffee.

Two primary types of coffee brewing devices in common use today are generally referred to as espresso machines and drip coffee makers. Espresso machines force hot pressurized water relatively quickly through packed and finely ground coffee beans to generate a highly concentrated, but low volume type of coffee generally referred to as espresso. Drip coffee makers, on the other hand, rely primarily on gravity rather than pressure, and drip heated water onto a brew basket of more coarsely ground coffee beans to allow the water to seep through the coffee grounds to extract the flavor-producing components therefrom. Drip coffee makers also generally incorporate a disposable or reusable filter in the brew basket such that the coffee grounds are retained in the brew basket while the coffee is fed by gravity into a cup or larger container disposed below the brew basket.

Particularly with drip coffee makers, a number of factors can greatly impact a coffee flavor profile, including, for example, the amounts of ground coffee and water that are used, the grind size used to grind the coffee beans, the temperature of the water, and the amount of time the water contacts the ground coffee, among others. Control over water/coffee contact time in a brew basket, for example, is generally based on the rate in which hot water enters the brew basket and the rate in which coffee exits the brew basket. Basic drip coffee makers may control these variables simply through the design of the water supply that supplies heated water to the brew basket and the outlet through which coffee exits the brew basket; however, such designs offer only a single water/coffee contact time that may not be optimal for all types or quantities of coffee, grind sizes, etc.

In addition, some drip coffee makers also include an automatic shut-off valve downstream of the brew basket that is mechanically actuated by removal of a carafe within which the coffee is dispensed to enable a user to pour coffee out of the carafe before the drip coffee brewing operation is complete. Shutting off the dispensing in the middle of a drip coffee brewing operation inherently increases the water/coffee contact time; however, it does so in an unpredictable and uncontrollable manner.

Therefore, a significant need continues to exist in the art for a manner of providing finer grained control over water/coffee contact time in a drip coffee maker.

### Summary

The herein-described embodiments address these and other problems associated with the art by regulating a water/coffee contact time for coffee produced in a brew basket by controlling an electronically-controllable dispense valve disposed downstream of the brew basket in response to an output of a dispense rate sensor that senses dispense rate from the brew basket. In addition, in some instances the dispense rate sensor may be implemented as a weight sensor that senses the weight of the brew basket, and may additionally be used to sense the amount of coffee grounds dispensed into the brew basket by a grinder.

Aspects of the invention are set out in the independent claims.

Other embodiments may include various methods for making and/or using any of the aforementioned constructions.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described example embodiments of the invention. This summary is merely provided to introduce a selection of concepts that are further described below in the detailed description, and is not intended to identify key or essential features of the claimed subject matter, nor is it intended to be used as an aid in limiting the scope of the claimed subject matter.

### Brief Description of the Drawings

FIGURE 1 is a front elevational view of a drip coffee maker consistent with some embodiments of the invention.
FIGURE 2 is a block diagram of an example control system for the drip coffee maker of Fig 1.
FIGURE 3 is a block diagram of various brewing components in a drip coffee maker consistent with some embodiments of the invention.
FIGURE 4 is a side cross-sectional view of a brew basket and basket support platform of a drip coffee maker consistent with some embodiments of the invention.
FIGURE 5 is a perspective view of a wedge body and lift body used in an electronically-controllable variable valve in the drip coffee maker of Fig. 4.
FIGURE 6 is a perspective view of a portion of the basket support platform, the wedge body, the lift body, and a valve drive of the valve illustrated in Fig. 5, when the electronically-controllable variable valve is in a fully closed position.
FIGURE 7 is a perspective view of a portion of the basket support platform, the wedge body, the lift body, and a valve drive of the valve illustrated in Fig. 5, when the electronically-controllable variable valve is in a fully open position.
FIGURE 8 is an elevational view of a valve member of the electronically-controllable variable valve illustrated in Fig. 5.
FIGURE 9 is a top plan view of the valve member of Fig. 8.
FIGURE 10 is a bottom plan view of the valve member of Fig. 8.
FIGURE 11 is an enlarged cross-sectional view of the valve of Fig. 5, when the electronically-controllable variable valve is in a fully closed position.
FIGURE 12 is an enlarged cross-sectional view of the valve of Fig. 5, when the electronically-controllable variable valve is in an intermediate position.
FIGURE 13 is an enlarged cross-sectional view of the valve of Fig. 5, when the electronically-controllable variable valve is in a fully open position.
FIGURE 14 is a functional view of another electronically-controllable variable valve consistent with the invention.
FIGURE 15 is a perspective view of a valve member and wedge body for another electronically-controllable variable valve consistent with the invention.
FIGURE 16 is a flowchart illustrating an example operational sequence for performing a drip coffee brewing operation using the drip coffee maker of Figs. 1-2 or Fig. 3.
FIGURE 17 is a flowchart illustrating another example operational sequence for performing a drip coffee brewing operation using the drip coffee maker of Figs. 1-2 or Fig. 3.
FIGURE 18 is a block diagram of various brewing components in a grind and brew drip coffee maker consistent with some embodiments of the invention.
FIGURE 19 is a flowchart illustrating an example operational sequence for performing a drip coffee brewing operation using the drip coffee maker of Fig. 18.

### Detailed Description

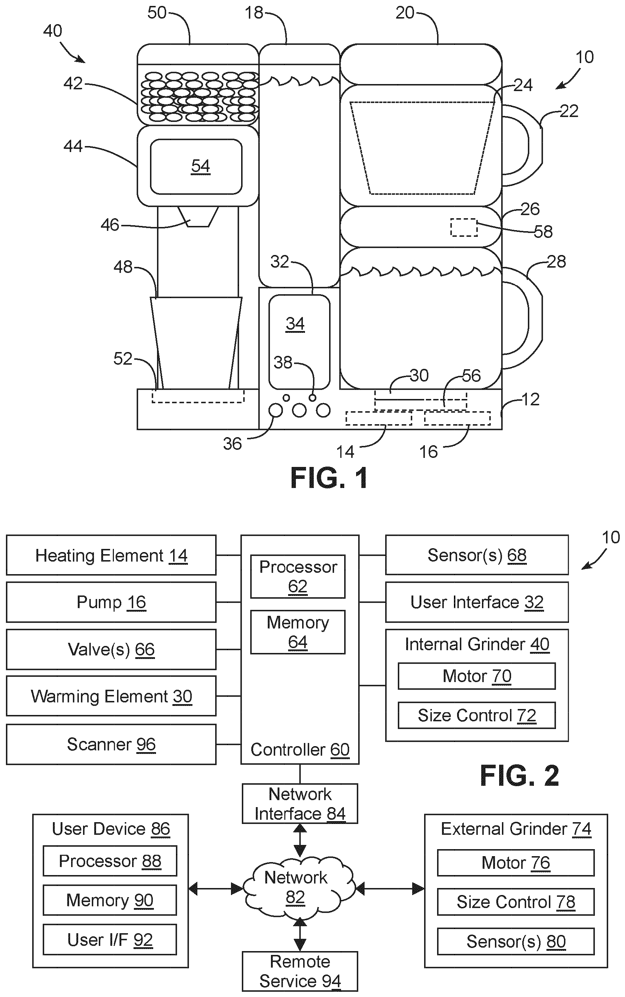

Now turning to the drawings, wherein like parts are denoted by like numbers throughout the several views, Fig. 1 illustrates a drip coffee maker 10 consistent with some embodiments of the invention. Drip coffee maker 10 may include a base or housing 12 within which may be included various components utilized in the brewing of coffee, e.g., a heating element 14, and in some instances, a water pump 16, for heating and conveying water from a water reservoir 18 to a water dispenser 20 disposed above a brew basket 22 within which may be disposed a quantity of ground coffee, and in many instances, a disposable or reusable filter. Brew basket 22 in some embodiments may be removable and/or may incorporate a lid or cover providing access to the brew basket 22 when adding ground coffee and a filter prior to brewing and/or when removing the ground coffee and filter after brewing. In some embodiments, a filter support 24 may be used to support a filter, and the coffee grounds contained therein, during a drip coffee brewing operation. Water dispenser 20 in some embodiments may include a shower head or other suitable mechanism for dispensing heated water evenly across the top surface of the ground coffee disposed in brew basket 22 during brewing.

Disposed beneath brew basket 22 is a coffee dispenser 26 that collects the brewed coffee that passes through the filter in brew basket 22 to dispense the brewed coffee into a container via gravity feed, e.g., a carafe 28, which is some instances may be a glass carafe or a thermal carafe, although brewing may be permitted into other types of containers, e.g., mugs or cups. Coffee dispenser 26 may, in some instances, also include an automatic shut-off valve that shuts off dispensing during a brewing operation if the carafe is removed by a consumer. In some instances, a warming element 30 may also be provided in order to maintain a desirable coffee temperature after brewing.

A user interface 32, e.g., including a graphical and/or touchscreen display 34, one or more physical controls 36 (e.g., buttons, knobs, sliders, etc.) and/or one or more indicators 38 (e.g., lights, alphanumeric displays, etc.), may also be disposed on base 12 to enable a user to interact with the drip coffee maker 10.

In some embodiments, a coffee grinder 40 may also be integrated with and/or interfaced with drip coffee maker 10. Coffee grinder 40, for example, may be integrally disposed in base or housing 12 in some embodiments, while in other embodiments, coffee grinder 40 may be removably coupled to or positionable proximate base or housing 12 and interfaced through one or more wires, one or more contacts, or a wireless network to enable commands and/or data to be communicated therebetween. Coffee grinder 40 may also be powered by drip coffee maker 10 or may be separately powered in various embodiments. In still other embodiments, no coffee grinder may be used, or to the extent a consumer grinds coffee for use with drip coffee maker 10, he or she does so using a completely separate coffee grinder. In still other embodiments, drip coffee maker 10 may include a grind-and-brew configuration where an integrated grinder on the drip coffee maker is positioned to dispense coffee grounds directly into brew basket 22.

Coffee grinder 40 may include a bin or hopper 42 positioned over a burr or blade grinding mechanism 44 that outputs ground coffee from a chute 46 into a container 48. Bin or hopper 42 may also include a lid or cover 50 for allowing for external access to add roasted coffee beans to the bin or hopper. Grinding mechanism 44 may be configured to support variable grind sizes in some embodiments, e.g., through manual or electronically-controlled adjustments to the grinding mechanism. In addition, in some embodiments, a scale 52 may be disposed in coffee grinder 40 to measure the weight of the coffee dispensed through chute 46. User interaction with coffee grinder 40 may be provided through a dedicated interface 54 in some embodiments, while in other embodiments, user interface 32 of drip coffee maker 10 may also control coffee grinder 40.

In addition, as will be discussed in greater detail below, drip coffee maker 10 may further include one or more dispense rate sensors to monitor a rate at which coffee is dispensed from brew basket 22. In some embodiments, for example, a load cell or other weight sensor 56 may be positioned in base 12 to sense the weight of carafe 28, from which a dispense rate may be determined. In some embodiments, a flowmeter or other flow rate sensor 58 may be positioned downstream of brew basket 22 to sense the flow rate of coffee exiting the brew basket. Other dispense rate sensors may be used in other embodiments, including but not limited to a brew basket weight sensor positioned in dispenser 26 to sense the weight of brew basket 22, a carafe fluid height or volume sensor, a brew basket fluid height or volume sensor, etc., as will become more apparent below.

With further reference to Fig. 2, drip coffee maker 10 may be under the control of a controller 60 that receives inputs from a number of components and drives a number of components in response thereto. Controller 60 may, for example, include one or more processors 62 and a memory 64 within which may be stored program code or instructions for execution by the one or more processors 62. The memory may be embedded in controller 60, but may also be considered to include volatile and/or non-volatile memories, cache memories, flash memories, programmable read-only memories, read-only memories, etc., as well as memory storage physically located elsewhere from controller 60, e.g., in a mass storage device or on a remote computer interfaced with controller 60. Controller 60 may also be implemented as a microcontroller in some embodiments, and as such these terms are used interchangeably herein. Controller 60 may also include discrete circuit logic in some embodiments, e.g., including passive and/or active circuit components.

As shown in Fig. 2, controller 60 may be interfaced with various components, including the aforementioned heating element 14, pump 16, warming element 30, user interface 32, and coffee grinder 40, as well as one or more electronically-controlled valves 66 and one or more sensors 68.

In some embodiments, for example, electronically-controlled valves 66 may be disposed upstream and/or downstream of brew basket 22 to effectively control the amount of time that water contacts the ground coffee in the brew basket. An upstream valve 66, for example, may be used to control the flow of heated water into the brew basket 22. A downstream valve 66 may be used to control the flow of coffee out of brew basket 22 into carafe 28 or another container, and in some embodiments, such a valve may also be fully closeable to prevent coffee from dripping from the brew basket whenever carafe 28 is removed. A downstream valve 66 may also, in some embodiments, enable alternate types of brewing processes, e.g., cold brewing processes where unheated water is steeped in coffee grounds for a relatively long duration. An upstream and/or downstream valve may be variable in some embodiments, whereby the rate of fluid flow through the valve is controllable, while in other embodiments, an upstream and/or downstream valve may be an on/off valve that is controllable between full on and fully off positions. In addition, while in some embodiments upstream and/or downstream valves 66 may be used, in other embodiments, no electronically-controllable valves may be used and/or one or both of valves 66 may be mechanically controlled. For the purposes of this disclosure, each of pump 16 and valves 66 may be considered to be a flow control device insofar as each may be used in the control of water or fluid flow through the brew basket (i.e., either into the brew basket, out of the brew basket, or both).

A wide variety of different types of sensors 68 may also be used, including for example, temperature sensors, fluid pressure sensors, fluid level sensors, flowmeters, presence sensors (e.g., to detect the proper positioning of a carafe, a brew basket, a water reservoir, a grinder hopper, etc.), position sensors, weight sensors, etc. Other sensors that may be suitable in monitoring the status of and otherwise controlling the operation of drip coffee maker 10 will be appreciated by those of ordinary skill having the benefit of the instant disclosure.

As noted above, where coffee grinder 40 is implemented as an internal coffee grinder, controller 60 may be configured to control various components of the coffee grinder directly, e.g., a motor 70 that drives the grinding process (e.g., by rotating one burr cutting element relative to another burr cutting element), and where electronic control of grind size is supported, a size control 72. Size control in other embodiments may be a manual adjustment.

Alternatively, where drip coffee maker 10 is interfaced with an external coffee grinder (e.g., external coffee grinder 74 of Fig. 2, shown including a motor 76, optional size control 78, and one or more sensors 80), controller 60 may communicate with the external coffee grinder over a network 82 through a network interface 84 to instruct the external coffee grinder to grind coffee, e.g., to grind a desired amount (e.g., based on weight or duration) and/or to grind at a specified grind size.

Network interface 84, for example, may represent one or more network interfaces suitable for interfacing with external devices via wired and/or wireless networks such as Ethernet, Bluetooth, NFC, cellular and other suitable networks. It may also be desirable, for example, to interface with one or more user devices 86, e.g., a consumer's mobile phone, which may include one or more processors 88, a memory 90 and a user interface 92) to enable a customer to control drip coffee maker 10 through the user device 86. It may also be desirable to interface with one or more remote services 94, e.g., to obtain firmware updates, to access remote databases with recipes, coffee bean information, to persist user preferences, to provide maintenance or diagnostic functionality, etc. Moreover, in some embodiments, at least a portion of controller 60 may be implemented externally, e.g., within a mobile device, a cloud computing environment, etc., such that at least a portion of the functionality described herein is implemented within the portion of the controller that is externally implemented.

In some embodiments, controller 60 may operate under the control of an operating system and may execute or otherwise rely upon various computer software applications, components, programs, objects, modules, data structures, etc. In addition, controller 60 may also incorporate hardware logic to implement some or all of the functionality disclosed herein. Further, in some embodiments, the operational sequences performed by controller 60 to implement the embodiments disclosed herein may be implemented using program code including one or more instructions that are resident at various times in various memory and storage devices, and that, when read and executed by one or more hardware-based processors, perform the operations embodying desired functionality. Moreover, in some embodiments, such program code may be distributed as a program product in a variety of forms, and that the invention applies equally regardless of the particular type of computer readable media used to actually carry out the distribution, including, for example, non-transitory computer readable storage media. In addition, it will be appreciated that the various operations described herein may be combined, split, reordered, reversed, varied, omitted, parallelized and/or supplemented with other techniques known in the art, and therefore, the invention is not limited to the particular sequences of operations described herein.

It will be appreciated that drip coffee maker 10 may be configured in a wide variety of other manners and may omit one or more of the components discussed above and/or may incorporate other components not explicitly discussed above. For example, as illustrated in Fig. 2, it may be desirable in some embodiments to utilize a bar code or other scanner 96 to enable coffee bean or ground coffee bar codes to be scanned to identify a particular coffee bean or ground coffee being used for a coffee brewing operation and thereby enable the coffee brewing operation to be specifically tailored for a particular coffee bean or ground coffee. Such functionality could also be supported in user device 86, e.g., using a camera of the user device to capture an image of a bar code.

Numerous additional variations and modifications to the drip coffee maker illustrated in Figs. 1-2 will be apparent to one of ordinary skill in the art, as will become apparent from the description below. Therefore, the invention is not limited to the specific implementations discussed herein.

### Brew Basket Flow Rate Control

Among other factors, water/coffee contact time in a brew basket can have a significant impact on coffee flavor, and it is generally desirable to provide a controlled and substantially uniform water/coffee contact time for all of the bean granules in a brew basket to optimize the uniformity of coffee extraction. Control over water/coffee contact time can also be important when maintaining optimal brewing conditions in a brew basket over a large range of serving sizes, grind sizes, and bean roasts, as the geometry, hydraulic resistance, and rate of extraction may all vary over the range of user controllable parameters. Water/coffee contact time is generally based on the rate in which hot water enters the brew basket and the rate in which coffee exits the brew basket, and in embodiments consistent with the invention, the rate in which coffee exits the brew basket, and in some instances, the rate in which hot water enters the brew basket, may be sensed and used to control an electronically-controlled dispense valve in connection with controlling the water/coffee contact time.

In particular, in some embodiments consistent with the invention, brew basket flow rate control is utilized to regulate a water/coffee contact time for coffee produced in a brew basket by controlling an electronically-controllable valve disposed downstream of the brew basket in response to an output of a dispense rate sensor that is configured to sense a dispense rate from the brew basket. The output in some embodiments may be a sensed dispense rate, while in other embodiments, the output may be a sensed value that is indicative of dispensing rate, e.g., weight, fluid volume, fluid height, etc.

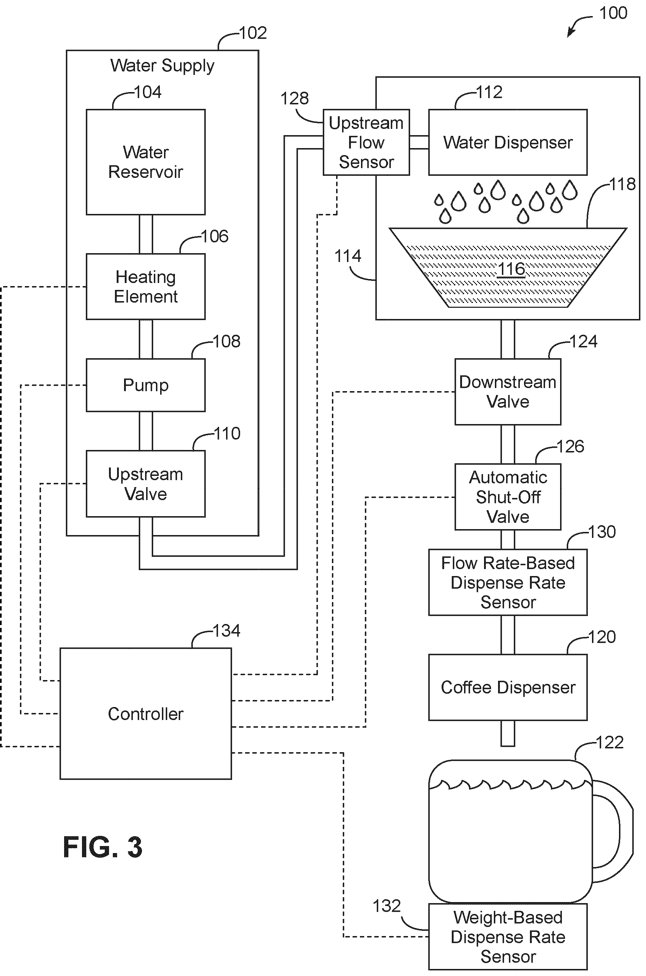

Fig. 3, as an example, illustrates the functional components of a drip coffee maker 100 that implements basket flow rate control consistent with the invention. Heated water for use in brewing is generated by a water supply 102, which may include a water reservoir 104 (or alternatively, a water line coupled to a water service) that feeds water to a heating element 106 to be heated to a desired temperature. In some embodiments, the temperature may be variable and optimized for a particular drip coffee brewing operation, while in other embodiments, a fixed temperature may be used. Various types of heating elements may be used, including a resistive heating element disposed in a water tank or adjacent a water line. A pump 108 may be used in some embodiments to drive the flow of heated water, while in other embodiments, the heated water may be driven without the use of a pump, e.g., as a result of pressure generated during the heating process.

Water supply may also include an upstream valve 110 that controls the rate of water flow to a water dispenser 112 disposed in a brew basket 114. In other embodiments, however, one or both of pump 108 and upstream valve 110 may be omitted.

Disposed within brew basket 114 during a drip coffee brewing operation may be a quantity of coffee grounds 116 disposed within a disposable or reusable filter 118. Heated water from water supply 102 is dispensed by water dispenser 112 onto the top surface of the coffee grounds 116 to bring the heated water into contact with the coffee grounds to extract solubles from the coffee grounds and thereby brew coffee. Water dispenser 112 may include a shower head or other collection of apertures suitable for distributing water over much of the surface of the coffee grounds, as it is generally desirable to evenly distribute water through the coffee grounds in order to uniformly extract solubles from the coffee grounds.

The coffee may pass through filter 118 and out of brew basket 114 to a coffee dispenser 120, which outputs the brewed coffee to a container 122, e.g., a carafe, cup or mug. In some embodiments, the rate of flow of coffee may be controlled by a downstream valve 124, and in some embodiments, an automatic shut-off valve 126 may be used to shut off coffee flow when no container 122 is positioned below the coffee dispenser 120.

An upstream flow sensor 128 is provided to sense a flow rate of heated water into brew basket 114, and one or more dispense rate sensors, e.g., a flow rate-based dispense rate sensor 130 and/or a weight-based dispense rate sensor 132, is used to sense a dispense rate of coffee from brew basket 114.

A flow rate-based dispense rate sensor may be implemented, for example, using a flow meter, while a weight-based dispense rate sensor may be implemented, for example, using a load cell, scale, strain gauge, or other type of weight sensor. In the illustrated embodiment, weight-based dispense rate sensor 132 may be implemented using a load cell positioned to sense the weight of container 122, which, if tared at the start of a drip coffee brewing operation, can be used to sense the weight of the coffee dispensed into the container, such that measurement of the weight over time, as well as the known weight of coffee (e.g., about 1014.42 gram per liter in some instances) can be used to determine dispense rate from the sensed weight.

It will be appreciated, however, that a wide variety of other dispense rate sensors may be used in other embodiments. In some embodiments, for example, a load cell or weight sensor may be used to sense the weight of brew basket 114. In other embodiments, various fluid height or fluid volume sensors may be used in other embodiments. A fluid volume sensor capable of sensing the volume of fluid in container 122 or brew basket 114 may be used in some embodiments, such that the change in volume over time can be used to derive a dispense rate. Similarly, when the geometry of the container or brew basket is known, the volume in the container or brew basket may also be determined based on a sensed fluid height in the container or brew basket. Various sensing technologies may be used to implement any of the aforementioned dispense rate sensors, e.g., load cells, strain gauges, optical sensors, ultrasonic sensors, time-of-flight sensors, capacitance sensors, etc., as will be appreciated by one of ordinary skill in the art having the benefit of the instant disclosure.

In addition, while an upstream flow sensor 128 is illustrated in Fig. 3, in some embodiments no upstream flow sensor may be used. In some embodiments, for example, the flow rate provided by the water supply may be substantially constant and known, such that no sensing of flow rate is needed. When used, upstream flow sensor 128 may be implemented using a flow meter in some embodiments.

A controller 134 may be used to control one or more of the aforementioned components, e.g., heating element 106, pump 108, upstream valve 110, downstream valve 124 and automatic shut-off valve 126, as well as to receive inputs from various sensors, including, for example, from upstream flow sensor 128, flow rate-based dispense rate sensor 130 and/or weight-based dispense rate sensor 132. In the alternative, one or more of these components may be mechanical in nature, and not electronically-controllable. An upstream valve 110 or downstream valve 124 may be manually controllable in some embodiments, and in some embodiments automatic shut-off valve 126 may be mechanically actuated based upon the presence or absence of container 122. Downstream valve 124 and automatic shut-off valve 126 may also be combined in some embodiments, and one or both may be omitted in some embodiments. For example, where downstream valve 124 is electronically-controllable, a pause control operated by a user or a presence detector may be used to trigger a full shut off of downstream valve 124 in some embodiments. In addition, it will be appreciated that coffee dispenser 120 in some embodiments may be integrated into any of brew basket 114, downstream valve 124, and automatic shut-off valve, e.g., implemented as an opening or aperture in one of these components through which coffee may flow.

In some embodiments, one or more electronically-controllable valves may be used for upstream valve 110 and/or downstream valve 124. In addition, while in some embodiments electronically-controllable on/off valves may be used, in some embodiments, it may be desirable to utilize electronically-controlled variable valves to assist in regulating the water/coffee contact time during a drip coffee brewing operation. In particular, in some embodiments, an electronically-controlled variable valve, which is moveable between a range of positions, may be used to controllably vary the flow rate into and/or out of a brew basket. Various types of electronically-controlled variable valves may be used in different embodiments, e.g., as disclosed in U.S. Pub. No.2024/0108161A1 to Fowler et al., which is incorporated herein by reference. Additional electronically-controlled variable valves may be used in other embodiments, as will be apparent to one of ordinary skill in the art having the benefit of the instant disclosure.

As such, in some embodiments, one or both of upstream valve 110 and downstream valve 124 may be implemented using an electronically-controllable variable valve that is capable of being moved within a continuous range of positions, or at least between a plurality of intermediate positions, to control a flow rate of fluid (e.g., water and/or coffee) through the valve. By controlling one or both of the rate of water entering the brew basket and the rate of coffee exiting the brew basket, the water/coffee contact time may be more precisely controlled, and may be adapted to accommodate different brewing parameters and thereby optimize a drip coffee brewing operation for different scenarios, e.g., different amounts of coffee grounds, different amounts of water, different water temperatures, different grind sizes, different types (e.g., roast levels, brands, models, producers, varieties, etc.) of coffee beans, as well as different user preferences, e.g., to brew stronger or weaker coffee and/or to increase or decrease the extraction or development of the drip coffee brewing operation to emphasize different flavor attributes.

Various valve designs that provide for a plurality of intermediate flow rates, and in some instances, a continuous range of flow rates, may be used in various embodiments, including various types of ball valves, pinch valves, needle valves, etc. Generally, such valves include a valve member that is moveable within a range of positions to variably occlude a port or passageway and thereby vary a flow rate through the port or passageway. In addition, various manners of driving such valves for electronic control may be used, e.g., using servo, stepper, or other types of motors, linear actuators, lead screw drives, or electromagnetic drives capable of relatively accurate positioning.

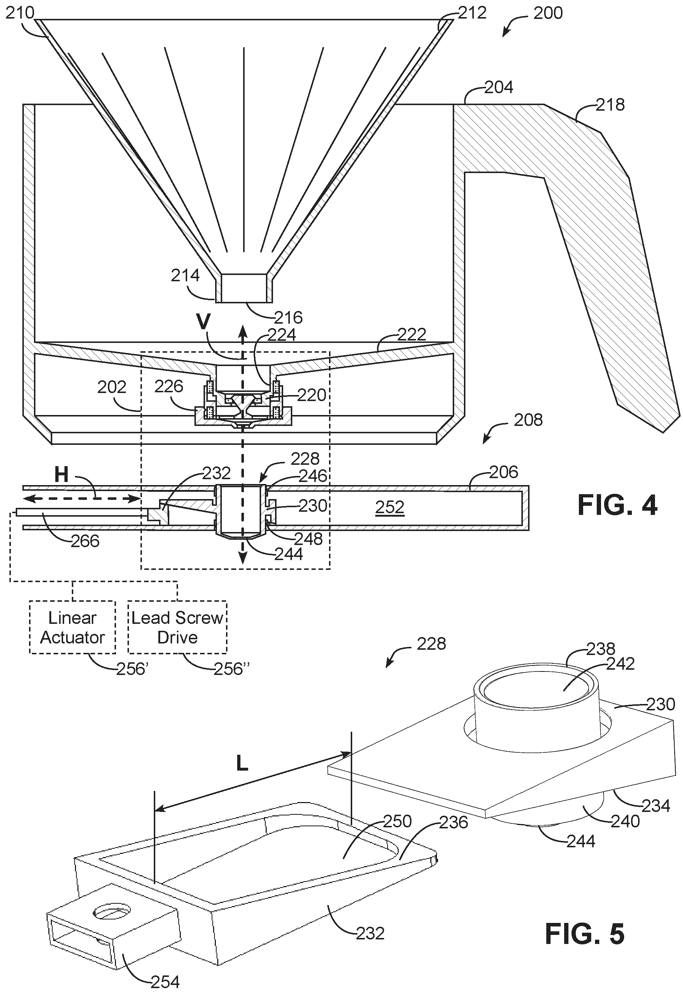

Fig. 4 illustrates a portion of a drip coffee maker 200 that incorporates as a downstream valve an electronically-controllable variable valve 202 that may be utilized in some embodiments of the invention. In this embodiment electronically-controllable variable valve 202 is used to regulate coffee flow out of a brew basket 204 that is removably supported on a basket support platform 206 forming part of a housing 208 of drip coffee maker 200, and as such, portions of the electronically-controllable variable valve 202 are disposed in both brew basket 204 and basket support platform 206, and are aligned with one another when brew basket 204 is properly positioned on basket support platform 206.

In this embodiment, brew basket 204 includes a removable filter support 210 configured to support a filter and coffee grounds (not shown in Fig. 4) during a drip coffee brewing operation. Removable filter support 210 includes a conical wall 212 and a downwardly-extending neck 214 that terminates in an outlet 216 to direct brewed coffee downwardly under the influence of gravity. A handle 218 facilitates insertion and removal of brew basket 204 into and from basket support platform 206. In addition, as filter support 210 is removable, it will be appreciated that multiple filter support designs may be supported in some embodiments, e.g., to accommodate different brew volumes (e.g., different inserts for single cup and full carafe brewing) or different filter geometries. In other embodiments, however, no removable insert may be used, and brew basket 204 may include an integrated and fixed filter support.

Electronically-controllable variable valve 202 in the illustrated embodiment may include a valve body 220 that is integrated into a bottom wall 222 of brew basket 204. In some embodiments, bottom wall 222 may also include an upwardly-facing sleeve 224 that is sized and configured to receive and support neck 214 of removable filter support 210, although it will be appreciated that support of removable filter support 210 may be independent of valve body 220 in other embodiments, and that valve body 220 may be mounted to and/or removable from brew basket 204 in some embodiments.

A valve member 226 is movably coupled to valve body 220 for movement about a substantially-vertical axis V, and a lift assembly 228, which includes a lift body 230 and a wedge body 232, is used to controllably lift valve member 226 to controllably occlude a port 234 in valve body 220. Lift body 230 is configured to move generally along axis V, while wedge body 232 is configured to move generally along a substantially-horizontal axis H, with a downwardly-facing mating surface 234 on lift body 230 engaging an upwardly-facing inclined surface 236 on wedge body 232 such that movement of wedge body 232 along axis H drives movement of lift body 230 along axis V. An upwardly-facing lifting surface 238 on lift body 230 engages with valve body 220 to lift valve body 220 and thereby progressively open electronically-controllably variable valve 202.

With further reference to Figs. 5-7, lifting surface 238 of lift body 230 is disposed on a tube portion 240 that defines a channel 242 through which coffee may flow to a coffee dispense outlet 244 defined on the bottom of lift body 230. Movement of lift body 230 is constrained to movement generally along axis V by a pair of sleeves 246, 248 formed in top and bottom surfaces of basket support platform 206.

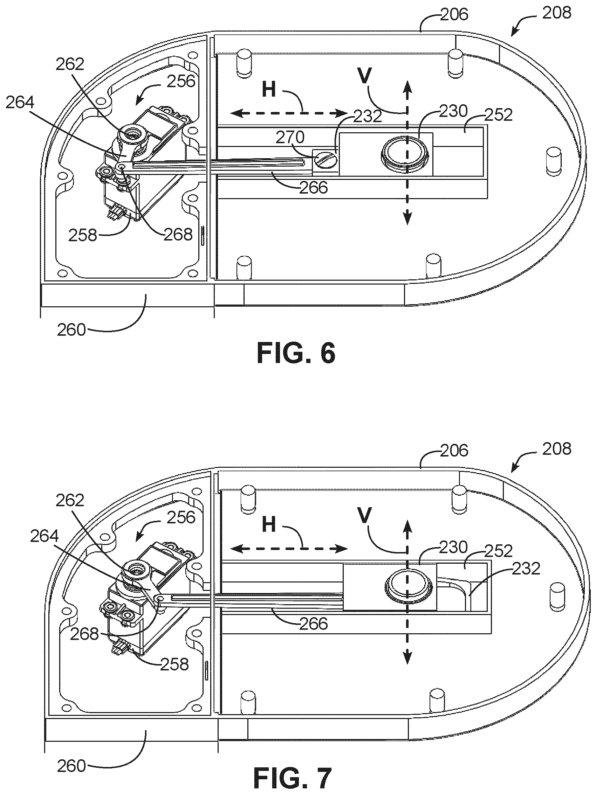

Wedge body 232 also includes an opening 250 that is configured to receive tube portion 240 of lift body 230, and opening 250 has a length L sufficient to accommodate tube portion 240 throughout the full movement of wedge body 232 through its full range of positions along axis H. Wedge body 232 is constrained to movement along the axis H by a slide channel 252 formed in basket support platform 206, and an attachment sleeve 254 is provided on wedge body 232 to engage with a valve drive 256. As shown in Fig. 6, for example, valve drive 256 may include a servo motor 258 that is positioned within a tower portion 260 of housing 208, and a slider-crank linkage, including a driving shaft 262, crank 264, and rod 266. A hinge pin 268 joins crank 264 and rod 266 and a fastener 270 secures rod 266 to wedge body 232 at attachment sleeve 254 to form a second hinge pin in the linkage. As illustrated in Fig. 4, however, other types of valve drives may be used to drive wedge body 232 along axis H, e.g., a linear actuator 256' or a lead screw drive 256".

It may be seen that in Fig. 6, which corresponds to a fully closed position of electronically-controllable variable valve 202, wedge body 232 is at its leftmost position along axis H, and lift body 230 is at its lowest position along axis V. As illustrated in Fig. 7, which corresponds to a fully open position of electronically-controllable variable valve 202, rotation of driving shaft 262 of servo motor 258 in a counter-clockwise manner pushes wedge body 232 to the right along axis H, which in turn lifts lift body in an upward direction along axis V. Thus, through actuation of servo motor 258, the position of electronically-controllable variable valve 202 may be precisely controlled within a continuous range of positions between fully open and fully closed positions.

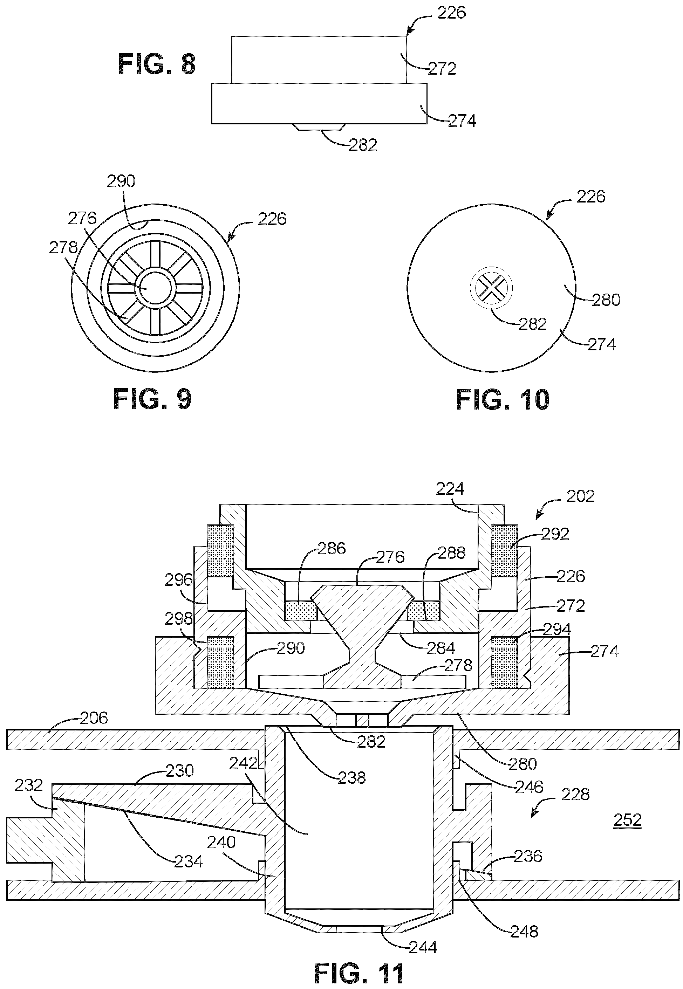

With reference to Figs. 8-13, valve member 226 in the illustrated embodiment may be of a two piece construction, with first member and second members 272, 274 joined to one another through a threaded coupling. First member 272 includes a substantially conical portion 276 supported by a plurality of radial supports 278 (Fig. 9) that allow for the flow of coffee therethrough, and second member 274 includes bottom surface 280 that engages with lifting surface 238 of lift body 230 and an outlet 282 through which coffee is allowed to flow through the action of gravity (Fig. 10).

Substantially conical portion 276 is configured to project through a port 284 in valve body 220. A gasket, washer or seal 286 is supported on a shoulder 288 of valve body 220 and substantially circumscribes port 284, and substantially conical portion 276 decreases in diameter from top to bottom such that movement of valve member 226 in a downward direction along axis V increases occlusion of port 284 until the substantially conical portion seats onto gasket or seal 286 to fully close port 284. It will be appreciated that electronically-controllable variable valve 202 is functionally similar to a needle valve; however, it will be appreciated that other valve member designs, including a substantially conical portion that decreases in diameter from bottom to top (among other configurations) may be used in other embodiments.

Valve member 226 is constrained for movement along axis V by incorporating a sleeve 290 that receives valve body 220, and a bias mechanism, implemented in the illustrated embodiment by a pair of annular magnets 292, 294 that mutually repel one another, is used to bias valve member 226 in a downward direction and thus towards the closed position for electronically-controllable variable valve 202. A pair of annular slots 296, 298 may be used to support annular magnets 292, 294, respectively

It will be appreciated that electronically-controllable variable valve 202 may be configured as a normally-open valve in other embodiments, and in some embodiments, other bias mechanisms, e.g., magnets that attract rather than repel (as is the case with magnets 292, 294), or one or more springs, may be used to bias an electronically-controllable variable valve to an open or closed position.

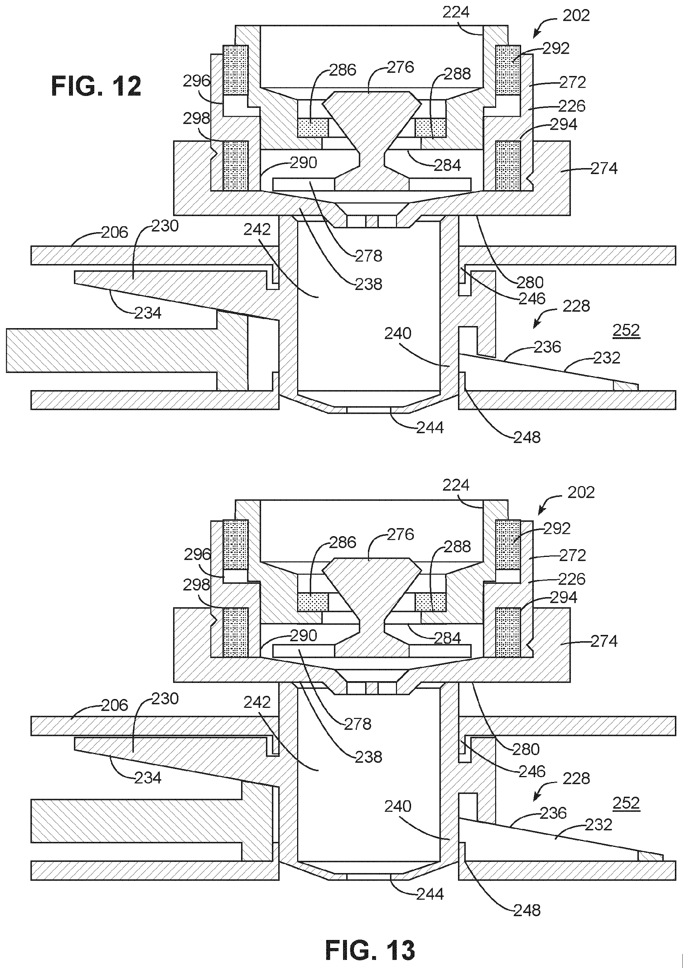

With reference to Figs. 11-13, these figures illustrate the movement of electronically-controllable variable valve 202 from a fully closed position (Fig. 11) to an intermediate position (Fig. 12) and then to a fully open position (Fig. 13). Movement of wedge body 232 in particular from left to right along axis H pushes lift body 230 upwardly along axis V, resulting in contact between mating surface 234 of lift body 230 and bottom surface 280 of valve member 226, lifting valve member 226 and causing substantially conical portion 276 to move upwardly and progressively open port 284.

It will be appreciated that electronically-controllable variable valve 202 provides a relatively efficient and compact design that is suitable for incorporation into a drip coffee maker, and that further may be well suited for use as an upstream valve in some embodiments. However, a wide variety of other electronically-controllable variable valve designs may be used in other embodiments.

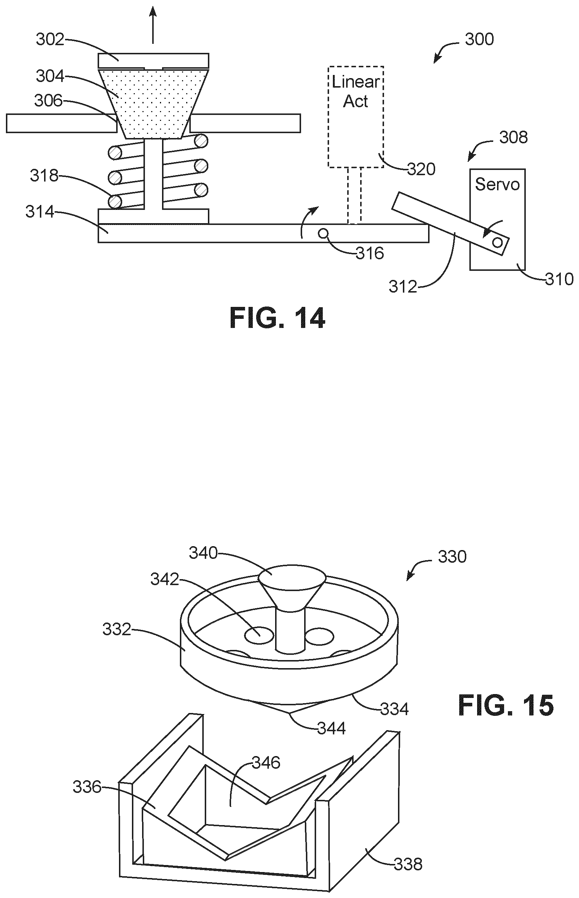

Fig. 14, for example, illustrates at 300 another embodiment of an electronically-controllable variable valve that includes a valve member 302 including a substantially conical portion 304 that projects through a port 306 and is biased to a normally-closed position. Rather than using a slider-crank linkage, however, a valve drive 308 includes a servo motor 310 having a crank 312 that engages a lever 314 that pivots about a pivot point 316 to push valve member 302 upwardly and thereby open the valve.

In addition, rather than utilizing a relatively rigid substantially conical portion that seals against a gasket or seal circumscribing port 306, substantially conical portion 304 may be formed of a pliable material to form the seal. Further, rather than utilizing magnets as a bias mechanism, a spring 318 may instead be used. In addition, in some embodiments, a linear actuator 320 may be utilized instead of a servo motor to control lever 314 and thus the position of valve 300.

Fig. 15 illustrates at 330 another embodiment of an electronically-controllable variable valve that utilizes a valve member 332 that has a mating surface 334 capable of directly engaging or contacting an inclined surface 336 of a wedge body 338, rather than relying on an intermediate lift body. Valve member 332 includes a substantially conical portion 340 and includes a plurality of through-holes 342 that extend to mating surface 334. A conical tip 344 is provided on mating surface 334 to provide a single point of release from which coffee or another fluid that flows through through-holes 342 and along mating surface 334 may smoothly flow into a container. In addition, wedge body 336 includes an interior opening 346 to enable the stream of fluid to flow unimpeded through the wedge body. Similar to electronically-controllable variable valve 202, movement of wedge body 338 along one axis will lift valve member 332 along a different, e.g., a transverse axis, but without an intermediate lift body.

It will be appreciated that other electronically-controllable variable valve designs may be used in other embodiments, and that in some embodiments, non-variable valve designs, e.g., electronically-controllable on/off valve designs, may be used. The latter may be toggled between on and off positions at least in part responsive to sensed dispense rate, e.g., to maintain a desired average dispense rate over time.

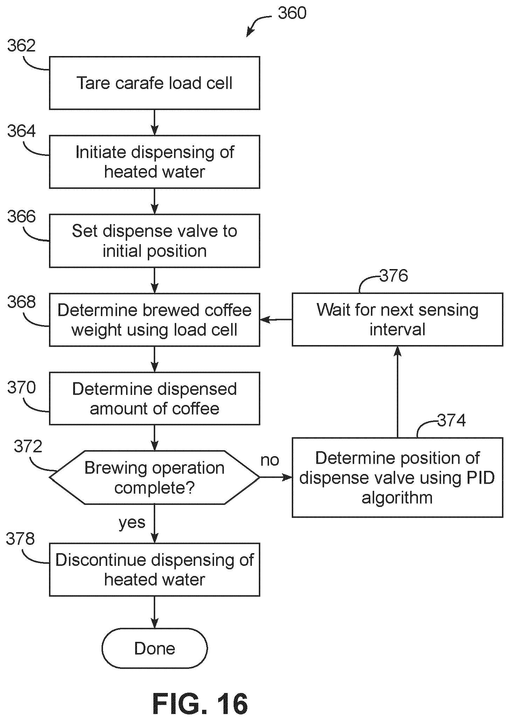

Now turning to Fig. 16, this figure illustrates an example operational sequence 360 for performing a drip coffee brewing operation, e.g., using drip coffee maker 10 of Figs. 1-2 or drip coffee maker 100 of Fig. 3. It is assumed, for example, that in this embodiment, a weight-based dispense rate sensor such as a load cell configured to sense the weight of a carafe or container is used to sense dispense rate. It is also assumed that in this embodiment the inflow rate of heated water into the brew basket is known without the need for a sensor, e.g., in the case that the water supply provides heated water at a constant and known rate during operation.

As such, at the initiation of the drip coffee brewing operation (e.g., performed in response to a user selecting a "start" button after placing a filter in the brew basket and filling the brew basket with a quantity of coffee grounds, operational sequence 360 begins in block 362 by taring the carafe load cell, thereby establishing a baseline weight for the empty carafe. Control then passes to block 364 to initiate dispensing of heated water into the brew basket, and then to block 366 to set the downstream dispense valve to an initial position. Where a variable dispense valve is used, the initial position may be a position between fully on and fully off, while where an on/off dispense valve is used, the initial position may be a fully on or fully off position. In some embodiments, opening of the dispense valve may be delayed from the initiation of the dispensing of heated water into the brew basket to enable brew basket to begin filling with heated water. In addition, a delay may be desired when a drip coffee brewing operation performs blooming or pre-wetting at the onset of the brewing operation.

Next, in block 368, a current weight of the brewed coffee in the carafe or container is determined using the load cell, and in block 370, the total amount of dispensed coffee is determined, e.g., based on a known or calculated weight of coffee by volume and the determined weight. Block 372 then determines if the brewing operation is complete. For example, where the drip coffee brewing operation is configured to dispense a predetermined amount of coffee (e.g., 1 cup, 8 cups, 64 oz, etc.), the brewing operation may be determined to be complete with the dispensed amount of coffee equals or exceeds the predetermined amount.

If the brewing operation is not complete, block 372 passes control to block 374 to determine a new position of the dispense valve based on the determined weight of the brewed coffee, and in particular, the rate of change in the determined weight over two or more sensing intervals, which is indicative of the dispense rate of coffee into the carafe. In the illustrated implementation, a PID (Proportional-Integral-Derivative) algorithm may be used, and in some implementations, such an algorithm may be used to match the dispense rate out of the brew basket with the inflow rate of water into the brew basket, thereby maintaining a substantially constant coffee/water contact time over the course of the drip coffee brewing operation. In other implementations, more complex algorithms may be used to provide different and/or more nuanced coffee flavor profiles, e.g., by varying the coffee/water contact time over the course of the drip coffee brewing operation.

Control then passes to block 376 to wait for a next sensing interval, and then control returns to block 368 to determine a current weight of the brewed coffee using the load cell. The drip coffee brewing operation continues until block 372 determines that the brewing operation is complete, whereby control then passes to block 378 to shut off the water supply and discontinue the dispensing of heated water, whereby the sequence is complete.

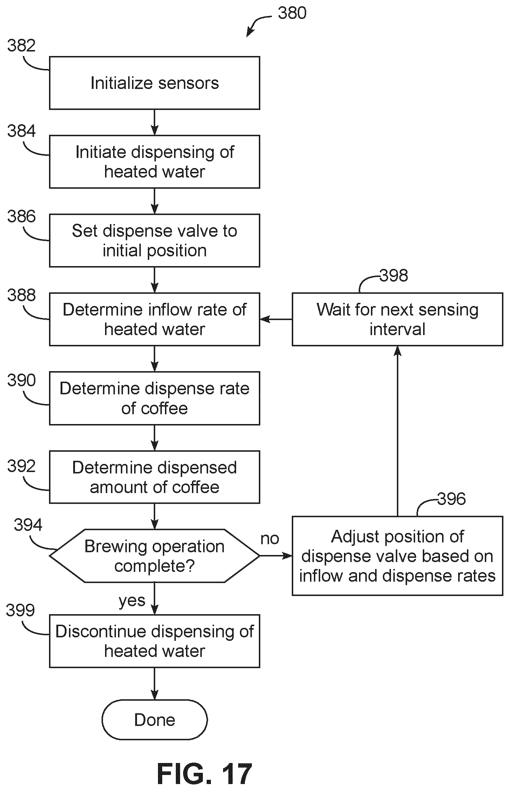

Fig. 17 illustrates another example operational sequence 380 for performing a drip coffee brewing operation, e.g., using drip coffee maker 10 of Figs. 1-2 or drip coffee maker 100 of Fig. 3. It is assumed, for example, that in this embodiment, any of the aforementioned types of dispense rate sensors may be used, and that an inflow sensor is used to sense the inflow rate of heated water into the brew basket.

As such, at the initiation of the drip coffee brewing operation (e.g., performed in response to a user selecting a "start" button after placing a filter in the brew basket and filling the brew basket with a quantity of coffee grounds, operational sequence 380 begins in block 382 by optionally initializing one or more of the sensors. For example, if a weight-based dispense rate sensor is used, a tare value may be captured for the empty container or carafe. Control then passes to block 384 to initiate dispensing of heated water into the brew basket, and then to block 386 to set the downstream dispense valve to an initial position. Where a variable dispense valve is used, the initial position may be a position between fully on and fully off, while where an on/off dispense valve is used, the initial position may be a fully on or fully off position. In some embodiments, opening of the dispense valve may be delayed from the initiation of the dispensing of heated water into the brew basket to enable brew basket to begin filling with heated water. In addition, a delay may be desired when a drip coffee brewing operation performs blooming or pre-wetting at the onset of the brewing operation.

Next, in block 388, a current inflow rate of the heated water into the brew basket may be determined, e.g., using an inflow sensor such as a flowmeter. Block 390 then determines a current dispense rate of the brewed coffee into the carafe or container, and in block 392, the total amount of dispensed coffee is determined, e.g., based on a known or calculated weight of coffee by volume and a determined weight, or based on accumulation or integration of determined dispense rates, as will be appreciated by one of ordinary skill in the art having the benefit of the instant disclosure. Block 394 then determines if the brewing operation is complete. For example, where the drip coffee brewing operation is configured to dispense a predetermined amount of coffee (e.g., 1 cup, 8 cups, 64 oz, etc.), the brewing operation may be determined to be complete when the dispensed amount of coffee equals or exceeds the predetermined amount.

If the brewing operation is not complete, block 394 passes control to block 396 to determine a new position of the dispense valve based on the determined inflow and dispense rates. In the illustrated implementation, it may be desirable to control the dispense valve position to attempt to match the inflow and dispense rates, thereby maintaining a substantially constant coffee/water contact time over the course of the drip coffee brewing operation. In other implementations, more complex algorithms may be used to provide different and/or more nuanced coffee flavor profiles, e.g., by varying the coffee/water contact time over the course of the drip coffee brewing operation. It will also be appreciated that where an on/off dispense valve is used, block 396 may be used to switch the dispense valve between fully on and fully off positions to provide a desired average dispense rate over time, while if a variable dispense valve is used, block 396 may be used to adjust a variable position of the dispense valve to provide a desired dispense rate.

Control then passes to block 398 to wait for a next sensing interval, and then control returns to block 388 to determine a current weight of the brewed coffee using the load cell. The drip coffee brewing operation continues until block 394 determines that the brewing operation is complete, whereby control then passes to block 399 to shut off the water supply and discontinue the dispensing of heated water, whereby the sequence is complete.

In addition, where other types of dispense rate sensors are used, other algorithms may be used to control a dispense valve position. For example, where brew basket volume or fluid height is sensed, control over dispense valve position may be based on maintaining a substantially constant fluid level within the brew basket, as doing so effectively matches the inflow rate of heated water into the brew basket with the dispense rate of coffee out of the brew basket. Other algorithms will be appreciated by one of ordinary skill in the art having the benefit of the instant disclosure.

### Grind-And-Brew Coffee Maker With Dose Sensing

In other embodiments, it may be desirable to utilize a weight sensor to sense the weight of coffee grounds dispensed into a brew basket and thereby measure the dose of coffee grounds used in a drip coffee brewing operation. A grind-and-brew coffee maker, within the context of the invention, is a drip coffee maker that integrates a coffee grinder capable of dispensing ground coffee directly into a brew basket, typically (though not necessarily) through gravity flow from a position over the brew basket.

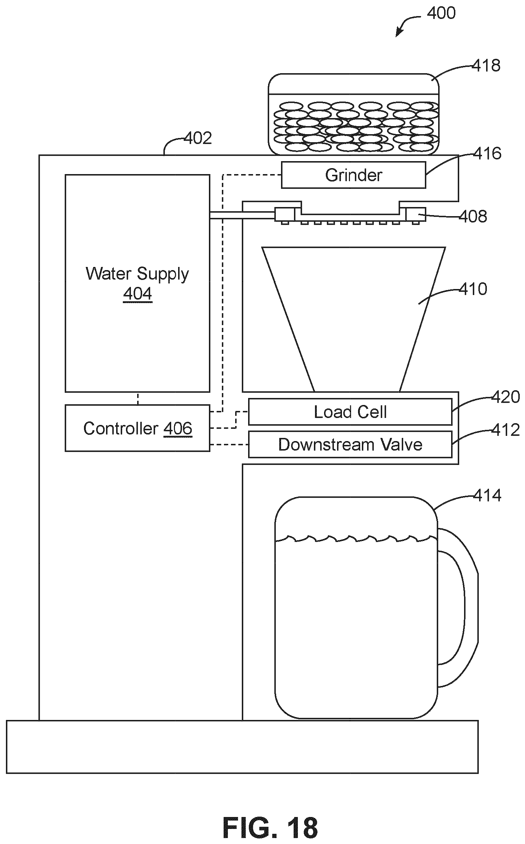

Fig. 18, for example, illustrates a grind-and-brew drip coffee maker 400 including a housing or base 402 with a water supply 404 (e.g., including similar components to water supply 102 of Fig. 3, e.g., a water reservoir, heating element, pump and/or upstream valve) controlled by a controller 406, and outputting to a water dispenser 408 positioned over a brew basket 410. A downstream valve 412, which in some embodiments may be an electronically-controlled variable valve or an electronically-controlled on/off valve, and which in some embodiments may also function as an automatic shut-off valve, controls the flow of coffee out of brew basket 410 and into a carafe or container 414.

In addition, a grinder 416 is positioned to dispense coffee grounds into brew basket 410, and receives coffee beans from a hopper 418. To sense the weight of coffee grounds dispensed into brew basket 410, a weight sensor, e.g., a load cell 420 is positioned to sense the weight of brew basket 410.

By sensing the weight of coffee grounds dispensed into the brew basket, controller 406 may operate grinder 416 such that a precise dose, and in some instances, grind size, may be achieved. In addition, in some embodiments, the weight sensor may additionally be used to control the dispense rate of coffee out of brew basket during brewing, similar to the various techniques described above.

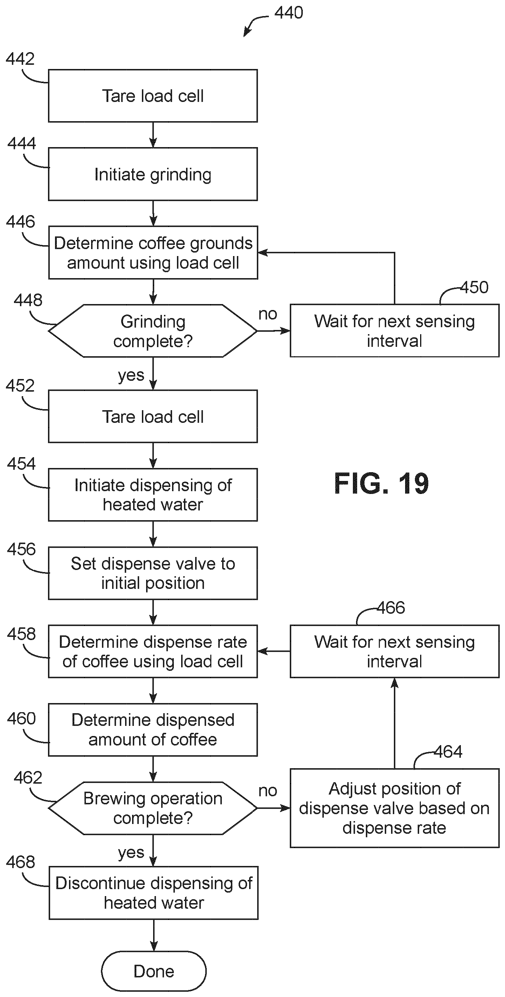

Fig. 19, for example, illustrates an example operational sequence 440 for performing a drip coffee brewing operation, e.g., using grind-and-brew drip coffee maker 400 of Fig. 18. At the initiation of the drip coffee brewing operation (e.g., performed in response to a user selecting a "start" button after placing a filter in the brew basket, operational sequence 440 begins in block 442 by taring the load cell 420 to offset the weight of the brew basket and filter. Control then passes to block 444 to initiate grinding by activating grinder 416, and where grind size is electronically-controllable, by setting the grind size of grinder 416 to a desired size. Block 446 then determines the amount (e.g., mass) of coffee grounds in the brew basket using load cell 420, and block 448 determines whether grinding is complete, i.e., whether the amount of coffee grounds matches the desired dose of coffee grounds for the drip coffee brewing operation.

If grinding is not complete, block 448 passes control to block 450 to wait for a next sensing interval, and then control returns to block 446 to determine the current amount of coffee grounds in the brew basket. Control proceeds in this manner until block 448 determines that grinding is complete, and control then passes to block 452 to once again tare the load cell and thereby offset the weight of the coffee grounds in the brew basket.

Control then passes to block 454 to initiate dispensing of heated water into the brew basket, and then to block 456 to set the downstream dispense valve to an initial position. Where a variable dispense valve is used, the initial position may be a position between fully on and fully off, while where an on/off dispense valve is used, the initial position may be a fully on or fully off position. In some embodiments, opening of the dispense valve may be delayed from the initiation of the dispensing of heated water into the brew basket to enable brew basket to begin filling with heated water. In addition, a delay may be desired when a drip coffee brewing operation performs blooming or pre-wetting at the onset of the brewing operation.

In the illustrated embodiment, no inflow sensor is used, so inflow rate of heated water into the brew basket may be based on a known rate of the water supply. In other embodiments, however, a current inflow rate of the heated water into the brew basket may be determined, e.g., using an inflow sensor such as a flowmeter. Block 458 then determines a current dispense rate of the brewed coffee into the carafe or container using load cell 420, and in block 460, the total amount of dispensed coffee is determined, e.g., based on accumulation or integration of determined dispense rates, as will be appreciated by one of ordinary skill in the art having the benefit of the instant disclosure. Block 462 then determines if the brewing operation is complete. For example, where the drip coffee brewing operation is configured to dispense a predetermined amount of coffee (e.g., 1 cup, 8 cups, 64 oz, etc.), the brewing operation may be determined to be complete when the dispensed amount of coffee equals or exceeds the predetermined amount.

If the brewing operation is not complete, block 462 passes control to block 464 to determine a new position of the dispense valve based on the determined dispense rate. In the illustrated implementation, it may be desirable to control the dispense valve position to attempt to match the inflow and dispense rates, thereby maintaining a substantially constant coffee/water contact time over the course of the drip coffee brewing operation. As such, the valve position may be opened further to counteract an increase in weight sensed by load cell 420 (which indicates that the dispense rate is less than the inflow rate), or may be closed further to counteract a decrease in weight sensed by load cell 420 (which indicates that the dispense rate is greater than the inflow rate). In other implementations, more complex algorithms may be used to provide different and/or more nuanced coffee flavor profiles, e.g., by varying the coffee/water contact time over the course of the drip coffee brewing operation. It will also be appreciated that where an on/off dispense valve is used, block 464 may be used to switch the dispense valve between fully on and fully off positions to provide a desired average dispense rate over time, while if a variable dispense valve is used, block 464 may be used to adjust a variable position of the dispense valve to provide a desired dispense rate.

Control then passes to block 466 to wait for a next sensing interval, and then control returns to block 458 to determine a current weight of the brewed coffee using the load cell. The drip coffee brewing operation continues until block 462 determines that the brewing operation is complete, whereby control then passes to block 468 to shut off the water supply and discontinue the dispensing of heated water, whereby the sequence is complete.

It will be appreciated that, while certain features may be discussed herein in connection with certain embodiments and/or in connection with certain figures, unless expressly stated to the contrary, such features generally may be incorporated into any of the embodiments discussed and illustrated herein. Moreover, features that are disclosed as being combined in some embodiments may generally be implemented separately in other embodiments, and features that are disclosed as being implemented separately in some embodiments may be combined in other embodiments, so the fact that a particular feature is discussed in the context of one embodiment but not another should not be construed as an admission that those two embodiments are mutually exclusive of one another. Various additional modifications may be made to the illustrated embodiments consistent with the invention. Therefore, the invention lies in the claims hereinafter appended.

## Claims

1. A drip coffee maker (10), comprising:
a brew basket (22) configured to house coffee grounds during brewing;
a water supply (102) disposed upstream of the brew basket (22) and configured to supply heated water to the brew basket (22) to bring the heated water into contact with the coffee grounds to perform a drip coffee brewing operation;
an electronically-controllable dispense valve disposed downstream of the brew basket (22);
a dispense rate sensor configured to sense a dispense rate from the brew basket (22); and
a controller (60) coupled to the electronically-controllable variable valve and the dispense rate sensor, the controller (60) configured to control the electronically-controllable dispense valve in response to an output of the dispense rate sensor.

2. The drip coffee maker (10) of claim 1, wherein:
the controller (60) is configured to control the electronically-controllable dispense valve in response to the output of the dispense rate sensor to regulate a water/coffee contact time for coffee produced in the brew basket (22); or
the controller (60) is configured to control the electronically-controllable dispense valve in response to the output of the dispense rate sensor to match the dispense rate from the brew basket (22) with an inflow rate of heated water into the brew basket (22).

3. The drip coffee maker (10) of claim 1, further comprising an inflow sensor configured to sense the inflow rate of heated water into the brew basket (22), wherein the controller (60) is configured to control the electronically-controllable dispense valve further in response to an output of the inflow sensor.

4. The drip coffee maker (10) of claim 1, wherein:
the controller (60) is configured to control the electronically-controllable dispense valve in response to the output of the dispense rate sensor to maintain a substantially constant fluid level in the brew basket (22); or
the controller (60) is configured to control the electronically-controllable dispense valve in response to the output of the dispense rate sensor using a PID algorithm.

5. The drip coffee maker (10) of any one of claims 1 to 4, wherein the electronically-controllable dispense valve is an on/off valve.

6. The drip coffee maker (10) of any one of claims 1 to 4, wherein the electronically-controllable dispense valve is a variable valve.

7. The drip coffee maker (10) of claim 6, wherein the electronically-controllable valve includes a valve member (226) projecting through a port and configured to move relative to the port to variably occlude the port and thereby vary a fluid flow rate through the port.

8. The drip coffee maker (10) of claim 6, wherein the electronically-controllable valve includes:
a valve member (226) projecting through a port and configured to move along a first axis to vary a fluid flow rate through the port;
a wedge body (232) configured for movement along a second axis and including an inclined surface operably coupled to the valve member (226) to cause movement of the valve member (226) along the first axis in response to movement of the wedge body (232) along the second axis; and
a valve drive (256) operably coupled to the wedge body (232) to controllably-position the wedge body (232) along the second axis and thereby control a position of the valve member (226) along the first axis.

9. The drip coffee maker (10) of any one of claims 1 to 8, wherein the dispense rate sensor is a flow-based dispense rate sensor, and
wherein preferably, the dispense rate sensor is a flowmeter disposed downstream of the brew basket (22).

10. The drip coffee maker (10) of any one of claims 1 to 8, wherein the dispense rate sensor is configured to sense a height or volume of fluid in the brew basket (22) or in a container into which coffee is dispensed, and
wherein preferably, the dispense rate sensor is an ultrasonic sensor, an optical sensor, a capacitance sensor, or a time-of-flight sensor.

11. The drip coffee maker (10) of any one of claims 1 to 8, wherein the dispense rate sensor is a weight-based dispense rate sensor.

12. The drip coffee maker (10) of claim 11, wherein:
the dispense rate sensor is a load cell or strain gauge; or
the dispense rate sensor is positioned to sense a weight of a container into which coffee is dispensed.

13. The drip coffee maker (10) of claim 11, wherein the dispense rate sensor is positioned to sense a weight of the brew basket (22), and

14. The drip coffee maker (10) of claim 13, further comprising a grinder (40) positioned to dispense coffee grounds into the brew basket (22), wherein the controller (60) is further configured to sense an amount of coffee grounds dispensed into the brew basket (22) using the dispense rate sensor.

15. A grind-and-brew drip coffee maker, comprising:
a brew basket (22) configured to house coffee grounds during brewing;
a water supply (102) disposed upstream of the brew basket (22) and configured to supply heated water to the brew basket (22) to bring the heated water into contact with the coffee grounds to perform a drip coffee brewing operation;
a grinder (40) positioned to dispense coffee grounds into the brew basket (22);
an electronically-controllable dispense valve disposed downstream of the brew basket (22);
a weight sensor (56) positioned to sense a weight of the brew basket (22); and
a controller (60) coupled to the electronically-controllable variable valve and the weight sensor (56), the controller (60) configured to control the grinder (40) and the electronically-controllable dispense valve in response to an output of the dispense rate sensor.

## Amended claims

### Amended claims in accordance with Rule 137(2) EPC.

1. A drip coffee maker (10), comprising:
a brew basket (22) configured to house coffee grounds during brewing;
a water supply (102) disposed upstream of the brew basket (22) and configured to supply heated water to the brew basket (22) to bring the heated water into contact with the coffee grounds to perform a drip coffee brewing operation;
an electronically-controllable dispense valve disposed downstream of the brew basket (22);
a dispense rate sensor configured to sense a dispense rate from the brew basket (22); and
a controller (60) coupled to the electronically-controllable variable valve and the dispense rate sensor, the controller (60) configured to control the electronically-controllable dispense valve in response to an output of the dispense rate sensor.

2. The drip coffee maker (10) of claim 1, wherein:
the controller (60) is configured to control the electronically-controllable dispense valve in response to the output of the dispense rate sensor to regulate a water/coffee contact time for coffee produced in the brew basket (22); or
the controller (60) is configured to control the electronically-controllable dispense valve in response to the output of the dispense rate sensor to match the dispense rate from the brew basket (22) with an inflow rate of heated water into the brew basket (22).

3. The drip coffee maker (10) of claim 1, further comprising an inflow sensor configured to sense the inflow rate of heated water into the brew basket (22), wherein the controller (60) is configured to control the electronically-controllable dispense valve further in response to an output of the inflow sensor.

4. The drip coffee maker (10) of claim 1, wherein:
the controller (60) is configured to control the electronically-controllable dispense valve in response to the output of the dispense rate sensor to maintain a substantially constant fluid level in the brew basket (22); or
the controller (60) is configured to control the electronically-controllable dispense valve in response to the output of the dispense rate sensor using a PID algorithm.

5. The drip coffee maker (10) of any one of claims 1 to 4, wherein the electronically-controllable dispense valve is an on/off valve.

6. The drip coffee maker (10) of any one of claims 1 to 4, wherein the electronically-controllable dispense valve is a variable valve.

7. The drip coffee maker (10) of claim 6, wherein the electronically-controllable valve includes a valve member (226) projecting through a port and configured to move relative to the port to variably occlude the port and thereby vary a fluid flow rate through the port.

8. The drip coffee maker (10) of claim 6, wherein the electronically-controllable valve includes:
a valve member (226) projecting through a port and configured to move along a first axis to vary a fluid flow rate through the port;
a wedge body (232) configured for movement along a second axis and including an inclined surface operably coupled to the valve member (226) to cause movement of the valve member (226) along the first axis in response to movement of the wedge body (232) along the second axis; and
a valve drive (256) operably coupled to the wedge body (232) to controllably-position the wedge body (232) along the second axis and thereby control a position of the valve member (226) along the first axis.

9. The drip coffee maker (10) of any one of claims 1 to 8, wherein the dispense rate sensor is a flow-based dispense rate sensor, and
wherein preferably, the dispense rate sensor is a flowmeter disposed downstream of the brew basket (22).

10. The drip coffee maker (10) of any one of claims 1 to 8, wherein the dispense rate sensor is configured to sense a height or volume of fluid in the brew basket (22) or in a container into which coffee is dispensed, and
wherein preferably, the dispense rate sensor is an ultrasonic sensor, an optical sensor, a capacitance sensor, or a time-of-flight sensor.

11. The drip coffee maker (10) of any one of claims 1 to 8, wherein the dispense rate sensor is a weight-based dispense rate sensor.

12. The drip coffee maker (10) of claim 11, wherein:
the dispense rate sensor is a load cell or strain gauge; or
the dispense rate sensor is positioned to sense a weight of a container into which coffee is dispensed.

13. The drip coffee maker (10) of claim 11, wherein the dispense rate sensor is positioned to sense a weight of the brew basket (22).

14. The drip coffee maker (10) of claim 13, further comprising a grinder (40) positioned to dispense coffee grounds into the brew basket (22), wherein the controller (60) is further configured to sense an amount of coffee grounds dispensed into the brew basket (22) using the dispense rate sensor.

15. A grind-and-brew drip coffee maker, comprising:
a brew basket (22) configured to house coffee grounds during brewing;
a water supply (102) disposed upstream of the brew basket (22) and configured to supply heated water to the brew basket (22) to bring the heated water into contact with the coffee grounds to perform a drip coffee brewing operation;
a grinder (40) positioned to dispense coffee grounds into the brew basket (22);
an electronically-controllable dispense valve disposed downstream of the brew basket (22);
a dispense rate sensor configured to sense a dispense rate from the brew basket (22), wherein the dispense rate sensor is implemented as a weight sensor (56) positioned to sense a weight of the brew basket (22); and
a controller (60) coupled to the electronically-controllable variable valve and the weight sensor (56), the controller (60) configured to control the grinder (40) and the electronically-controllable dispense valve in response to an output of the dispense rate sensor.
